# DEMANDE DE BREVET EUROPEEN

(11) **EP 1 435 678 A2**
(43) Date de publication de la demande: **07.07.2004**
(21) Numéro de dépôt: 04007630.9
(22) Date de dépôt: 30.05.2000
(51) Int. Cl.: H01R 13/703

(54) **Telegestion d'eclairage**

(30) Priorité: 08.06.1999 FR 9907176; 03.09.1999 FR 9911094
(62) Demande divisionnaire de: 00938862.0
(71) Demandeur: Lempia-Laboratoire d'Electronique, Mécanique, Pyrotechnique et Informatique Appliqué, 51100 Reims (FR)
(72) Inventeur: Denes, Alain, 78180 Montigny Le Bretonneux (FR)
(74) Mandataire: Cabinet Hirsch

(57) **Abrégé**

Le réseau de transmission de données sans fils, comprend au moins un noeud (1) constitué par un émetteur/récepteur radio assurant la réémission de messages qu'il reçoit. L'émetteur/récepteur radio est interfacé avec un circuit de contrôle d'au moins une lampe électrique d'éclairage d'un élément d'éclairage (1a).

## Description

La présente invention concerne un réseau de transmission de données sans fils, un candélabre pour mettre en oeuvre ce réseau ainsi qu'un boîtier de connexion. Elle concerne également un procédé d'allumage de la lampe du candélabre selon l'invention. L'invention concerne encore un procédé de télégestion d'éclairage dans le réseau de l'invention et un procédé d'initialisation du réseau.

A l'heure d'aujourd'hui, il n'existe pas de solution simple, efficace et économique pour assurer la télégestion de l'éclairage dans les zones urbaines.

La présente invention a pour but de proposer une solution à ce problème.

A cette fin, la présente invention propose un candélabre ayant au moins une lampe et un émetteur/récepteur radio. L'émetteur/récepteur peut avantageusement être alimenté électriquement par le candélabre.

Selon un mode de réalisation préféré, l'émetteur/récepteur comprend un circuit de contrôle du candélabre. Le circuit de contrôle peut avantageusement commander l'allumage et l'extinction du candélabre. Par ailleurs, le circuit de contrôle peut avantageusement varier la puissance délivrée à la lampe. Enfin, le circuit de contrôle peut avantageusement effectuer au moins l'une des mesures suivantes :
- mesure du courant électrique consommé par la lampe ;
- mesure de la température extérieure ou du circuit de contrôle ;
- mesure de la luminosité extérieure ;
- mesure du déphasage entre courant et tension alimentant la lampe ;
le circuit de contrôle pouvant en outre comprendre une mémoire de stockage d'une ou plusieurs mesures effectuées.

Selon un autre mode de réalisation préféré, le circuit de contrôle mesure le courant électrique consommé par la lampe et coupe l'alimentation électrique du candélabre en fonction du courant mesuré.

Selon encore un autre mode de réalisation préféré, le candélabre comprend une alimentation à découpage alimentant la lampe. De préférence, l'alimentation à découpage délivre sélectivement à la lampe au moins une première tension et une deuxième tension inférieure à la première tension. L'alimentation à découpage peut avantageusement délivrer sélectivement à la lampe au moins une troisième tension. Le circuit de contrôle peut avantageusement commander l'alimentation à découpage, notamment pour déterminer la tension à appliquer à la lampe. Par ailleurs, l'alimentation à découpage peut avantageusement alimenter également l'émetteur/récepteur.

Selon encore un autre mode de réalisation préféré, la lampe est une lampe à décharge électrique, de préférence une lampe à vapeur de mercure ou une lampe à vapeur de sodium.

Selon un autre aspect, l'invention propose un procédé d'allumage de la lampe du candélabre précédent, caractérisée en ce que l'allumage de la lampe comprend :
- l'application à la lampe de la première tension pour amorcer la lampe ;
- après que la lampe soit amorcée, l'application à la lampe de la deuxième tension pour alimenter la lampe avec une tension de service.

Il est en outre avantageux d'appliquer à la lampe la troisième tension pour faire varier l'intensité d'éclairage de la lampe.

Selon encore un autre aspect, l'invention propose un boîtier de connexion, avec :
- une douille femelle de réception d'une lampe électrique ;
- un émetteur/récepteur radio ;
- des moyens de connexion électrique en liaison électrique avec la douille.

Selon un mode de réalisation préféré, les moyens de connexion forment une douille mâle.

Selon un autre mode de réalisation préféré, l'émetteur/récepteur est alimenté par le biais des moyens de connexion.

Selon encore un autre mode de réalisation préféré, le circuit de contrôle commande l'ouverture ou la fermeture de la liaison électrique entre les moyens de connexion et la douille femelle. Par ailleurs, le circuit de contrôle peut avantageusement varier la puissance délivrée à la douille femelle. Enfin, le circuit de contrôle peut avantageusement effectuer au moins l'une des mesures suivantes :
- mesure du courant électrique fourni à la douille femelle ;
- mesure de la température extérieure ou du circuit de contrôle ;
- mesure de la luminosité extérieure ;
- mesure du déphasage entre courant et tension alimentant la douille femelle ;
- le circuit de contrôle pouvant en outre comprendre une mémoire de stockage d'une ou plusieurs mesures réalisées.

Selon encore un autre mode de réalisation préféré, le circuit de contrôle mesure le courant électrique fourni à la première douille et ouvre la liaison électrique entre les moyens de connexion et la douille femelle en fonction du courant mesuré.

Selon encore un autre mode de réalisation préféré, la liaison électrique comprend une alimentation à découpage, l'entrée de l'alimentation à découpage étant reliée aux moyens de connexion et la sortie de l'alimentation à découpage étant reliée à la première douille. De préférence, l'alimentation à découpage délivre sélectivement à la douille femelle au moins une première tension et une deuxième tension inférieure à la première tension. Avantageusement, l'alimentation à découpage délivre sélectivement à la douille au moins une troisième tension. De préférence, le circuit de contrôle commande l'alimentation à découpage, notamment pour déterminer la tension à appliquer à la douille femelle. Selon encore un autre mode de réalisation préféré, l'alimentation à découpage alimente en outre l'émetteur/récepteur.

Selon un autre aspect, l'invention propose un réseau de transmission de données sans fils, comprenant au moins un candélabre selon l'invention, l'émetteur/récepteur radio constituant un noeud du réseau. De préférence, le réseau comprend au moins un deuxième noeud agencé dans une armoire électrique alimentant en électricité le candélabre ou au moins un candélabre quelconque. Avantageusement, le deuxième noeud du réseau commande l'alimentation en énergie du candélabre. Par ailleurs, le deuxième noeud du réseau effectue au moins l'une des mesures suivantes :
- vérifier la présence de la tension d'alimentation dans l'armoire électrique ;
- mesurer les courants délivrés par l'armoire ;
- mesurer les courants de fuites ;
- mesurer les courants induits ;
- détecter des pertes d'isolation ;
- mesurer le potentiel de corrosion ;
le deuxième noeud pouvant en outre comprendre une mémoire de stockage d'une ou plusieurs mesures réalisées.

Selon un mode de réalisation préféré, le réseau comprend au moins un routeur apte à mettre en communication deux noeuds quelconques du réseau.

Selon un autre aspect, l'invention propose, un procédé d'initialisation de l'adresse d'un noeud du réseau selon l'invention, caractérisé par :
- l'affectation d'une adresse par défaut au noeud avant sa mise en service ;
- la mise en service du noeud ;
- l'envoi via le réseau d'un message à destination de l'adresse par défaut ;
- l'envoi d'une réponse en retour par le noeud ayant l'adresse par défaut ;
- sur réception de la réponse, envoi via le réseau à destination de l'adresse par défaut d'un message pour affecter une nouvelle adresse au noeud correspondant en remplacement de l'adresse par défaut.

De préférence, la nouvelle adresse est spécifique au noeud.

Selon un autre aspect, l'invention propose un procédé de télégestion d'éclairage utilisant un réseau selon l'invention, caractérisé par :
- l'envoi via le réseau à destination du premier noeud ou du deuxième noeud d'un ordre de contrôle ;
- la réception et l'exécution de l'ordre de contrôle par le premier noeud ou le deuxième noeud.

Selon un mode de réalisation préféré, l'ordre de contrôle est envoyé à destination du premier noeud et le premier noeud reçoit et exécute l'ordre de contrôle. L'ordre de contrôle comprend l'allumage ou l'extinction de la lampe du candélabre. Par ailleurs, l'ordre de contrôle peut comprendre la mesure d'au moins une grandeur physique, le procédé comprenant en outre l'envoi en retour par le premier noeud via le réseau du résultat de la mesure. En variante, l'ordre de contrôle comprend la lecture de la mesure d'au moins une grandeur physique mis en mémoire par le premier noeud, le procédé comprenant en outre l'envoi en retour par le premier noeud via le réseau de la mesure lue en mémoire.

Selon un autre mode de réalisation préféré, l'ordre de contrôle est envoyé à destination du deuxième noeud et le deuxième noeud reçoit et exécute l'ordre de contrôle. L'ordre de contrôle peut comprendre l'ouverture ou la fermeture de l'alimentation du candélabre. Par ailleurs, l'ordre de contrôle comprend la mesure d'au moins une grandeur physique, le procédé comprenant en outre l'envoi en retour par le deuxième noeud via le réseau du résultat de la mesure. En variante, l'ordre de contrôle comprend la lecture de la mesure d'au moins une grandeur physique mise en mémoire par le deuxième noeud et le procédé comprenant en outre l'envoi en retour par le deuxième noeud via le réseau de la mesure lue en mémoire. Avantageusement, le procédé peut comprendre :
- l'interrogation du premier noeud par le deuxième noeud via le réseau ;
- l'envoi en retour de la valeur d'au moins une grandeur physique mesurée par le premier noeud ;
- la réception et la mémorisation de la grandeur physique par le deuxième noeud.

Au sens de la présente invention, il faut entendre par candélabre tout lampadaire ou autre élément d'éclairage tels que des rampes lumineuses de pistes d'atterrissage d'aéroports. Par éclairage urbain, on comprendra toute infrastructure d'éclairage des villes ou encore de sites industriels importants tel que des raffineries de pétrole, des centrales nucléaires ou encore les éclairages des pistes d'atterrissage d'aéroports.

D'autres caractéristiques et avantages de l'invention apparaîtront à la lecture de la description qui suit d'un mode de réalisation préféré de l'invention, donnée à titre d'exemple et en référence au dessin annexé.
La figure 1 illustre un réseau de radiotransmission de données selon un mode de réalisation préféré de l'invention.
La figure 2 illustre une douille gigogne selon un aspect de l'invention.

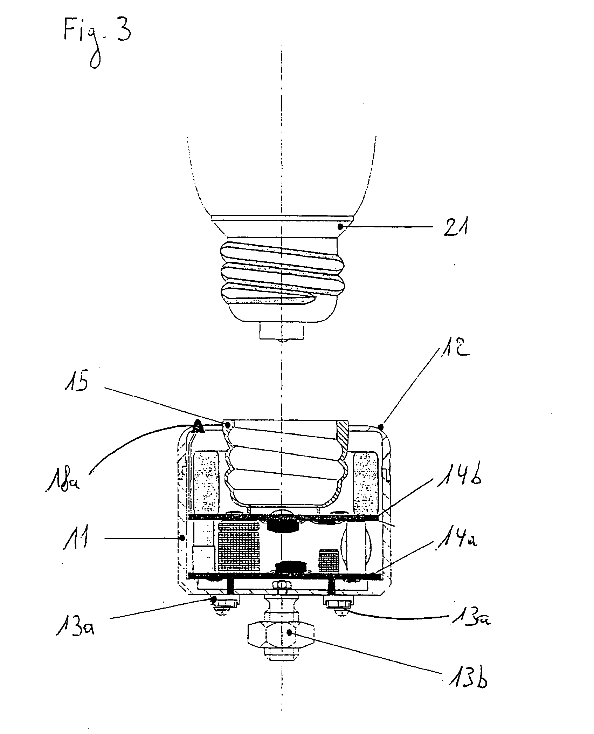

La figure 3 illustre une variante de la douille gigogne de la figure 2.
La figure 4 est un schéma illustrant l'électronique contenue dans la douille gigogne de la figure 2 ou 3.

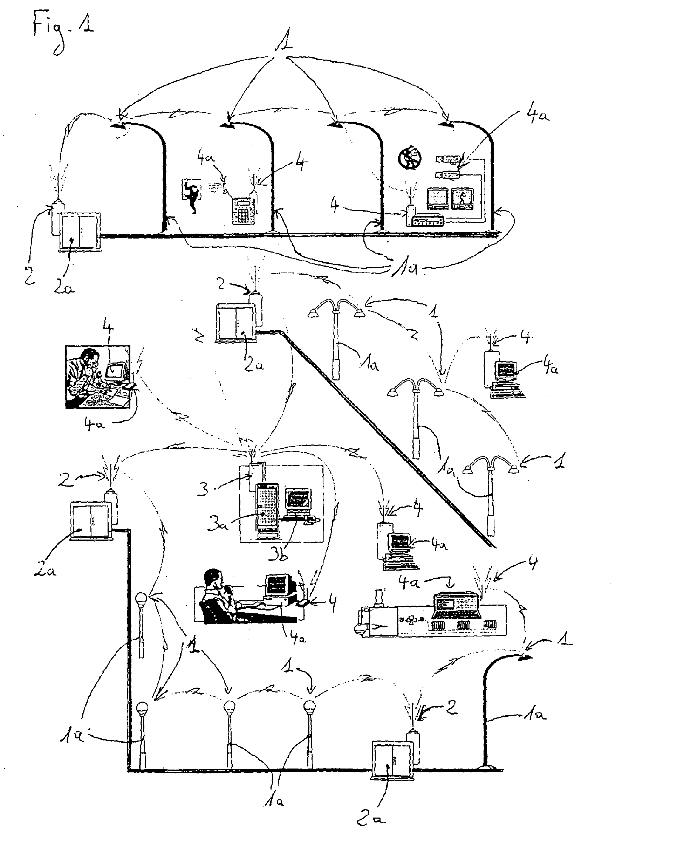

En relation avec la figure 1, nous allons décrire un réseau de radiotransmission de données selon un mode de réalisation préféré de l'invention.

Le réseau comprend une pluralité de noeuds de radiotransmission 1. Chaque noeud 1 est agencé sur un candélabre 1a respectif. Le réseau comprend avantageusement des noeuds de radiotransmission 2. Chaque noeud 2 est agencé dans une armoire électrique 2a respective qui alimente en énergie un certain nombre de candélabres. Généralement, une armoire électrique 2 peut alimenter jusqu'à 50 candélabres. Le réseau peut ainsi reposer sur l'ensemble des candélabres d'une ville ainsi que sur l'ensemble des armoires électriques alimentant ces candélabres. En outre, le réseau comprend avantageusement un noeud de radiotransmission 3 qui coopère avec un routeur 3a.

Comme l'illustre la figure 1, le réseau peut également comprendre des noeuds 4 agencés sur ou à proximité d'éléments adhérents 4a au réseau qui ne sont ni des candélabres, ni des armoires d'alimentation de candélabres. Du point de vue de la radiotransmission, les noeuds 4 sont constitués de façon similaire aux noeuds 1 et assurent les mêmes fonctions qu'un noeud 1 au sein du réseau.

Chaque noeud 1, 2 et 3 comprend un émetteur/récepteur radio interfacé avec un module de contrôle électronique comprenant un microcontrôleur pour gérer les communications du noeud. Chaque noeud 1, 2 et 3 peut travailler en modulation de fréquence sur par exemple 16 canaux. Il pourra s'agir de préférence de fréquences dans les bandes VHF, UHF ou encore des hyper fréquences, par exemple, de l'ordre de 2,4 GHz. Le trajet de propagation des ondes radio d'un noeud à un autre peut s'effectuer en onde directe d'espace. Le module de contrôle est de préférence capable de choisir automatiquement le canal de communication en mesurant le rapport signal/bruit sur chaque canal pour sélectionner celui qui présente le meilleur rapport. Par ailleurs, il comprend avantageusement une unité de contrôle automatique de gain pour pouvoir lutter contre l'évanouissement du signal (dit « fading ») et la diffraction du signal par les obstacles.

Les noeuds 1 peuvent avantageusement être alimentés électriquement par l'arrivée d'électricité alimentant le candélabre 1a sur lequel il est agencé. De façon similaire, les noeuds 2 peuvent avantageusement être alimentés électriquement par l'arrivée d'électricité alimentant l'armoire électrique 2a dans lequel il est agencé.

Un mode de communication entre les noeuds du réseau peut être le suivant. Il est précisé que pour la description de ce mode de communication, toute référence à un noeud 1 et au candélabre 1a qui lui est associé correspond indifféremment, soit effectivement à un noeud 1 et au candélabre 1a associé, soit à un noeud 4 et à l'élément adhérent 4a associé.

Le noeud 3 est apte à communiquer avec tous les noeuds 2. Pour cela, le noeud 3 peut comporter un système de radiotransmission unique pour communiquer séquentiellement avec les noeuds 2. Le noeud 3 peut aussi comporter plusieurs systèmes de radiotransmission pour pouvoir communiquer simultanément avec plusieurs noeuds 2.

Chaque noeud 2 est capable de communiquer avec un ensemble correspondant de noeuds 1 que l'on désignera dans la suite par noeuds 1 rattachés. De préférence, les noeuds 1 rattachés à un noeud 2 sont ceux agencés sur l'ensemble des candélabres 1a alimentés en énergie par l'armoire électrique 2a dans laquelle est agencé le noeud 2 considéré. La communication entre un noeud 2 avec chacun des noeuds 1 rattachés peut se faire directement. Mais il est plus avantageux que la communication entre un noeud 2 et un noeud 1 rattaché quelconque se fasse par répétition de la communication par d'autres noeuds 1 rattachés, mais qui sont intermédiaires du point de vue spatial entre le noeud 2 et le noeud 1 considéré. Autrement dit, chaque noeud 1 peut servir de répéteur à un ou plusieurs noeuds 1 voisins. Par répétition du message par un noeud, il faut comprendre la réception du message par ce noeud qui, après traitement par son module de contrôle le réémet - sous forme d'une nouvelle trame - à destination d'un autre noeud. En variante, la répétition pourrait consister classiquement en une réamplification du signal. Les candélabres étant généralement alignés le long de la rue, la communication entre un noeud 2 et un noeud 1 rattaché quelconque pourra ainsi se faire par le biais des noeuds 1 de tous les candélabres 1a intermédiaires entre l'armoire électrique 2a du noeud 2 et le candélabre 1a du noeud 1 considéré, les noeuds 1a intermédiaires retransmettant à chaque fois au suivant le message du noeud 2 vers le noeud 1 considéré ou vice-versa. Ce mode de transmission définit une véritable chaîne de transmission entre le noeud 2 et les noeuds 1 rattachés. Bien évidemment, le noeud 2 est en communication directe avec le ou les noeuds 1 rattachés qui lui sont spatialement les plus proches. Dans cette configuration - qui est illustrée par la figure 1-, chaque noeud 2 est en tête d'une chaîne de transmission comprenant tous les noeuds 1 qui lui sont rattachés. En variante, il est possible d'avoir un noeud 2 en tête de plusieurs chaînes de transmission distinctes qui sont chacune composés par des noeuds 1 qui lui sont rattachés ; par exemple, une chaîne composée par les noeuds 1 des candélabres 1a situés d'un côté d'une rue et une deuxième chaîne composée par les noeuds 1 des candélabres 1a situés de l'autre côté de cette rue, les deux chaînes ayant à leur extrémité le même noeud 2 de l'armoire électrique 2a qui les alimente. En variante, il est possible pour les chaînes de transmission de se subdiviser en plusieurs sous-chaînes de transmission, un noeud 1 de la chaîne se situant en tête d'une pluralités de sous-chaînes composés chacune de noeuds 1 rattachés au même noeud 2 en tête de chaîne ; ce cas de figure peut être utilisé lorsque une armoire 2a alimente les candélabres 1a d'une première rue et puis également ceux d'une deuxième rue sécante. Il n'est bien sûr pas nécessaire que les chaînes de transmission telle que décrites, soient homogènes, c'est-à-dire ont en tête un noeud 2 qui est suivi par un ou plusieurs noeuds 1 - ou noeuds 4 assimilés à des noeuds 1. On peut par exemple avoir un noeud 1 - ou un noeud 4 - en tête de chaîne ou encore avoir un noeud 2 entre deux noeuds 1 de la chaîne, ce dernier cas étant illustré par la chaîne inférieure sur la figure 1.

Par ailleurs, il est avantageux que la portée de transmission de chaque noeud 1 rattaché couvre plusieurs autres noeuds 1 rattachés. De même, il est avantageux qu'un noeud 2 puisse communiquer avec plusieurs noeuds 1 rattachées. Ainsi, en cas de défaillance d'un noeud 1 l'empêchant de répéter un message, le noeud 1 - ou le noeud 2 - qui a tenté de lui transmettre un message en vain, pourra le réémettre vers un autre noeud 1, non défaillant, afin de ne pas interrompre la chaîne de transmission. Pour cela, sachant que deux candélabres successifs sont généralement placés à moins de 30 m l'un de l'autre, la puissance de chacun des noeuds pourra être déterminée pour couvrir par exemple une distance de 100 à 200 m pour couvrir au moins trois noeuds 1 successifs, ce qui correspond à une puissance comprise entre environ 1 et 2 W. Les noeuds 1 et 2 pourront être dotés chacun d'une antenne omnidirectionnelle. Il est avantageux que chaque noeud de la chaîne envoie un message d'accusé de réception au noeud précédent qui lui a adressé un message ; de la sorte, chaque noeud de la chaîne peut déterminer facilement si le noeud suivant est défaillant et dans l'affirmative, de retransmettre le message à un autre noeud de la chaîne.

Le noeud 3 peut également communiquer avec chacun des noeuds 1 par le biais du noeud 2 auquel il est rattaché, le noeud 2 servant de répéteur. En fait, il est avantageux que le routeur 3a mette en oeuvre des fonctions d'aiguillage permettant d'établir une communication entre deux noeuds quelconques du réseau, en disposant par exemple des mêmes prérogatives d'aiguillages adressées que celles traitées par les autocommutateurs de la téléphonie RTC classique, sauf à préciser qu'il s'agit en l'occurrence de liaison hertzienne.

La communication entre le noeud 3 et les noeuds 2 peut se faire directement auquel cas il leur faudra généralement une puissance supérieure à celle des noeuds 1 pour couvrir les distances qui sont plus importantes. Les noeuds 2 pourront comprendre une antenne directionnelle orientée vers le noeud 3 alors que le noeud 3 aura de préférence une antenne omnidirectionnelle. Puisque la communication dans le réseau se fait d'une part entre le noeud 3 et les noeuds 2 correspondant à un premier niveau de communication et d'autre part entre chaque noeud 2 et les noeuds 1a rattachés correspondant à un second niveau de communication, il peut être utilisé des fréquences de radiotransmission et des protocoles différents pour chacun des étages. Dans ce cas, les noeuds 2 comprendront deux émetteurs/récepteurs correspondant chacun à un des étages de communication. Par ailleurs, il est également possible d'établir la communication entre le noeud 3 et des noeuds 2 en utilisant des noeuds de radiotransmission intermédiaires en tant que répéteur de manière similaire à la répétition entre les noeuds 2 et les noeuds 1 précédemment décrite. Les répéteurs entre le noeud 3 et un noeud 2 pourront être d'autres noeuds 2, voire également des noeuds 1.
Ce mode de communication pourrait également être utilisé dans d'autres réseaux que celui de la figure 1. Bien évidemment, le réseau peut également mettre en oeuvre d'autres modes de communication que celui décrit.

Le réseau peut avantageusement mettre en oeuvre une méthode d'adressage interactive pour affecter une adresse à chaque noeud de la manière suivante. Le module de contrôle de chaque noeud du réseau a en mémoire, par exemple une mémoire EEPROM, un numéro d'identification lui servant d'adresse sur le réseau. A sa fabrication, avant installation sur site, il est attribué un même numéro d'identification par défaut à tous les noeuds. Chaque noeud est mis en service un après l'autre sur le site pour participer au réseau, de la manière suivante. Après mise en service initial d'un noeud sur le site, le routeur 3 ou un poste central de gestion quelconque envoie un message d'interrogation vers ce noeud ayant pour adresse le numéro d'identification par défaut. Ce dernier retourne en réponse un accusé de réception. Le routeur 3 ou le poste central lui envoie alors un nouveau message lui indiquant un nouveau numéro d'identification spécifique qui constituera son adresse dans le réseau. A réception, le noeud en cause remplacera en mémoire le numéro d'identification par défaut par ce nouveau numéro. Une fois son nouveau numéro mémorisé, on pourra procéder à la mise en service initial d'un autre noeud de la même manière. La procédure peut évidemment être automatisée en envoyant cycliquement un message d'interrogation à l'attention d'un éventuel noeud ayant le numéro d'identification par défaut. En cas de réponse, le routeur 3 ou le poste central saura qu'un nouveau noeud a été mis en service et pourra alors automatiquement lui attribuer un numéro d'identification spécifique. Au contraire, le défaut de réponse signifie l'absence de mise en service d'un nouveau noeud ou éventuellement sa défaillance. Cette méthode d'adressage interactive peut être mise en place dans d'autres réseaux que celui de l'invention. Le réseau selon l'invention peut évidemment également utiliser une autre méthode d'adressage.

Le routage des messages entre deux noeuds quelconques qui souhaitent communiquer entre eux peut être réalisé selon des méthodes connus en soi. Par exemple, il peut être réalisé de la manière suivante. Au sein d'une chaîne de transmission, les noeuds ont chacun pour adresse un numéro consécutif au précédent. De la sorte, un noeud quelconque recevant un message à lui adressé par un autre noeud vérifie le contenu du message qui contient l'adresse du noeud qui le lui a envoyé et l'adresse du noeud destinataire final du message. Si le noeud en question n'est pas le destinataire final, il réémet le message. Si le noeud qui le lui avait envoyé a une adresse (n-1) inférieure à la sienne (n), il l'envoie à l'adresse (n+1) immédiatement supérieure à la sienne. Au contraire, si le noeud qui le lui avait envoyé a une adresse (n+1) supérieure à la sienne (n), il l'envoie à l'adresse (n-1) immédiatement inférieure à la sienne. Bien évidemment, le routeur 3 réalise l'aiguillage entre les différentes chaînes.

Le réseau pourra être du type à accès aléatoire dans lequel un noeud émet après qu'il ait constaté, en l'écoutant, que le canal est libre. Plus avantageusement, le réseau est du type à accès contrôlé dans lequel un noeud, de préférence le noeud 3, est maître et est seul à donner le droit de communication aux autres noeuds, par exemple par scrutation - encore dit « polling ».

Nous allons maintenant décrire un système de télégestion de l'éclairage urbain ou similaire utilisant le réseau de l'invention. Dans cette application, il est avantageux que le réseau mette en oeuvre le mode de communication et la méthode d'adressage précédemment décrite, mais d'autres pourraient être utilisés.

Le module de contrôle de chacun des noeuds 1 des candélabres 1a que l'on souhaite gérer est complété avec une unité de contrôle de candélabre. Cette unité de contrôle de candélabre peut notamment remplir une ou plusieurs des fonctions suivantes :
- commander l'allumage ou l'extinction de la lampe du candélabre 1a sur lequel est agencé ce noeud 1 ;
- gérer l'amorçage de la lampe ;
- varier la puissance d'alimentation délivrée à la lampe ;
- mesurer le courant électrique consommé par la lampe ;
- déterminer le déphasage entre le courant et la tension (cos φ) ;
- mesurer la luminosité au niveau de la lampe ;
- mesurer la température extérieure ou à l'intérieur du module électronique.

Ces fonctions peuvent être mises en oeuvre de façon connue en soi.

Le module de contrôle du noeud du candélabre pourra stocker dans sa mémoire les données ainsi mesurées.

Dans le cas où l'unité de contrôle de candélabre comprend des moyens pour mesurer le courant électrique consommé par la lampe, elle pourra avantageusement couper l'alimentation de la lampe du candélabre la en cas de surintensité mesurée pour sécuriser le candélabre. Dans ce cas, il est préférable que la remise en route de la lampe soit manuelle ou nécessite une commande envoyée au module de contrôle du candélabre par le poste de supervision décrit plus loin.

De façon similaire, le module de contrôle de chacun des noeuds 2 des armoires électriques 2a que l'on souhaite gérer est complété avec une unité de contrôle d'armoire électrique. Cette unité de contrôle d'armoire électrique peut notamment remplir une ou plusieurs des fonctions suivantes :
- commander dans l'armoire électrique 2a du noeud 2 associé l'ouverture ou la fermeture du circuit d'alimentation des candélabres alimentés par cette armoire ;
- vérifier la présence de la tension d'alimentation de l'armoire ;
- mesurer les courants délivrés aux candélabres par l'armoire, ou les courants induits ou les courants de fuite, etc ;
- détecter des pertes d'isolation ;
- mesurer le potentiel de corrosion.

Les mesures et vérifications peuvent être réalisées en permanence de façon continue. L'ouverture/fermeture du circuit d'alimentation des candélabres alimentés par l'armoire peut se faire suivant la luminosité ambiante ou suivant des programmes horaires internes.

Ces fonctions peuvent être mises en oeuvre de façon connue en soi.

Le module de contrôle du noeud 2 de l'armoire pourra stocker dans sa mémoire les données ainsi déterminées.

Par ailleurs, un poste de supervision 3b, typiquement un ordinateur muni d'un écran, est relié au routeur 3. Il pourrait également être relié à un noeud quelconque du réseau. Ce poste de supervision déroule un programme destiné à commander les candélabres 1a et les armoires 2a en envoyant des messages via le réseau vers les noeuds 1 ou 2 correspondants. Les modules de contrôle de ces noeuds 1 ou 2 pourront mettre en oeuvre les ordres contenus dans les messages provenant du poste de supervision. Les ordres ainsi délivrés pourront bien évidemment concerner toute fonction que peut mettre en oeuvre le module de contrôle du noeud 1 ou 2 à l'égard du fonctionnement du candélabre 1a ou de l'armoire électrique 2a correspondant, notamment celles précités. De façon similaire, le poste de supervision pourra demander via le réseau, à un noeud 1 ou 2 quelconque de lui envoyer en réponse les mesures et autres détections relatifs au fonctionnement du candélabre ou de l'armoire électrique, qui sont réalisées et stockées en mémoire par le module de contrôle du noeud correspondant. Le poste de supervision pourra traiter les données ainsi rapatriés, tenir des journaux de ces données et aussi commander les candélabres et armoires électriques en fonction de ces données. Le poste de supervision procédera de préférence à la collecte des données de façon séquentielle.

Plus généralement, ce poste de supervision peut être chargé de router les messages - en relation avec le routeur 3 - et administrer l'ensemble des noeuds du réseau.

En variante, les noeuds 2 peuvent cycliquement, ou sur demande du poste de supervision, interrogés les noeuds 1 rattachés pour que ceux-ci leur transmettent les mesures et autres détections relatifs au fonctionnement du candélabre. Le noeud 2 pourra alors stocké dans sa mémoire ces données. Dans ce cas, le poste de supervision pourra obtenir l'ensemble des données relatives aux candélabres 1 directement auprès des noeuds 2, sans interroger lui-même les noeuds 1.

La gestion correcte des installations d'éclairage d'une ville, de la manière décrite précédemment, ne requière qu'une infime charge de travail pour les différents éléments composant le réseau. Il est dès lors avantageux d'utiliser le temps laissé libre par la télégestion de l'éclairage urbain pour la communication avec ou entre des équipements adhérents 4a au réseau autres que des candélabres ou des armoires électriques alimentant des candélabres. Ces équipements adhérents 4a sont alors reliés chacun à un noeud de radiotransmission 4 qui est agencé sur l'équipement adhérent ou à proximité de celui-ci. Chaque noeud 4 comprend les mêmes éléments qu'un noeud de type 1 ou 2, à savoir un émetteur/récepteur gérer par un module de contrôle électronique. Les équipements adhérents 4a pouvant être hétérogènes, le module de contrôle du noeud 4 est relié à l'équipement adhérent 4a correspondant de préférence par le bais d'un modem d'adaptation protocolaire. Un noeud 4 remplit les mêmes fonctions dans le réseau que n'importe quel noeud 1 du point de vue de la radiotransmission.

L'élément adhérent 4a pourra alors communiquer à travers le réseau avec un autre élément adhérent 4a ou avec le poste de supervision ― ou vice-versa -.

A titre d'exemple, un élément adhérent 4a peut consister en un autre poste de supervision dédié à la gestion ou à la surveillance, via le réseau, d'autres éléments adhérents tels que :
- des feux tricolores régissant la circulation ou autres signalisations routières ;
- des installations d'alarme dans des bâtiments ;
- des panneaux d'affichages installés à travers la ville ;
- des caméras de surveillance du trafic routier pour notamment transmettre les images de la caméra au poste de supervision via le réseau.

Les éléments adhérents 4a peuvent également être de nature mobile. Ainsi, des éléments adhérents 4a peuvent consister en des badges incorporant un émetteur et portées par des personnes sujettes à des malaises. L'appui sur un bouton du badge provoque l'envoi d'un message d'alerte à un centre d'assistance - qui est un autre élément adhérent 4a - via le réseau en permettant à la fois d'identifier la personne concernée par le numéro d'identification de l'émetteur et de localiser la personne en question en relevant le numéro d'identification du ou des noeuds 1 les plus proches.

De manière similaire, il peut être réalisé un service de radiomessagerie entre un centre de diffusion et des récepteurs via le réseau. Le réseau peut aussi être utilisé comme réseau de téléphonie fixe ou mobile, par exemple, dédié aux employés municipaux.

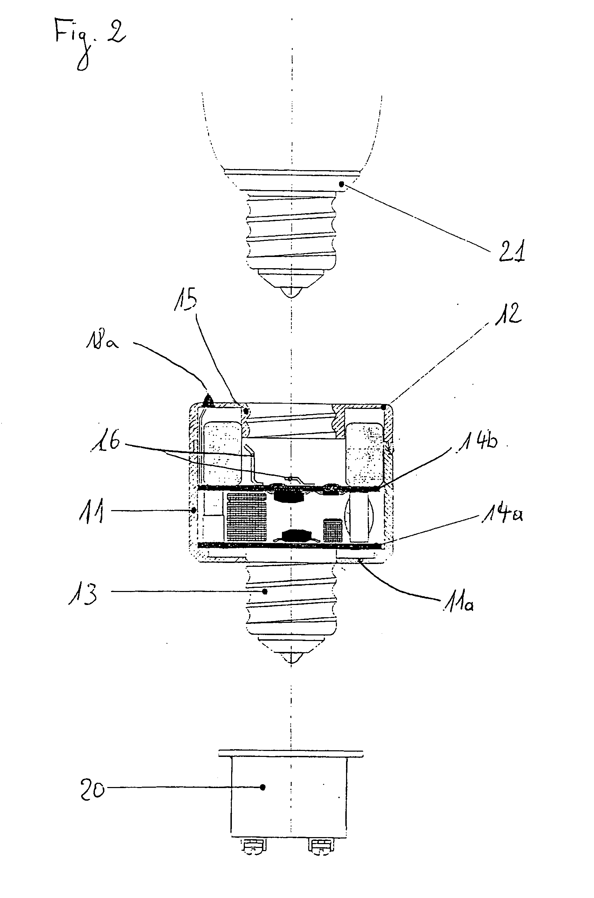

En relation avec la figure 2, nous allons maintenant décrire une douille gigogne 10 particulièrement adaptée pour constituer un noeud 1 du réseau précédemment décrit.

La douille gigogne 10 comprend un boîtier 11 fermé par un couvercle 12. Une douille mâle 13 à vis ― similaire à un culot de lampe - est agencée dans le fond 11a du boîtier 11 et fait saillie hors du boîtier 11. La douille mâle 13 est apte à être connectée dans une douille femelle 20 équipant un candélabre 1a. Le couvercle 12 tient par enclipsage sur le boîtier 11. Il peut en outre être collé pour assurer une étanchéité complète.

Un circuit imprimé 14a est agencé à l'intérieur du boîtier. La douille 13 est reliée électriquement au circuit imprimé 14a. Un deuxième circuit imprimé 14b est agencé dans le boîtier 11 entre le couvercle 12 et le circuit imprimé 14a. Une douille femelle 15 à vis est agencée dans le couvercle 12. Le circuit imprimé 14b comprend des lamelles 16 aptes à assurer le contact électrique avec une ampoule 21 correspondante lorsque celle-ci est vissée dans la douille 15.

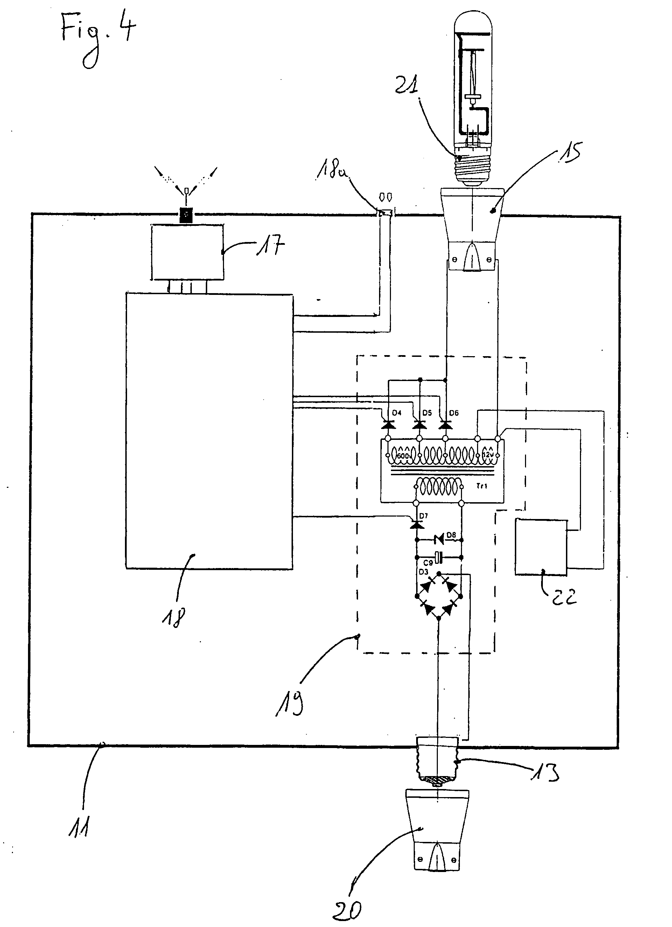

En conséquence, la douille gigogne 10 est apte à être montée dans la douille femelle classique d'un candélabre qui habituellement reçoit directement l'ampoule qui est maintenant reçue par la douille femelle 15 de la douille gigogne 10. Bien évidemment, las douilles 13 et 15 peuvent être de tout type adapté, autre qu'à vis. En variante, la figure 4 propose une douille gigogne dans laquelle la douille mâle 13 est remplacée par un bornier de connexion 13a placé sur la face extérieure du fond 11a du boîtier 11 et par une tige filetée 13b également agencée sur la face extérieure du fond 11a pour permettre la fixation de la douille gigogne 10 à l'aide d'un écrou.

Les deux circuits imprimés 14a et 14b sont en liaison électrique l'un avec l'autre et comportent les circuits électroniques suivants, tels que illustrés par la figure 4:
- un émetteur/récepteur radiofréquence 17 ;
- un module de contrôle électronique à microprocesseur 18 ;
- une alimentation à découpage 19.

L'émetteur/récepteur 17 est interfacé avec le module de contrôle 18 qui gère les communications de l'émetteur/récepteur 17. L'émetteur/récepteur 17 et le module de contrôle 18 sont connus en soi et peuvent avantageusement présenter les caractéristiques et fonctions décrites pour ces éléments en relation avec la description des noeuds 1. En particulier, le module de contrôle 18 pourra comprendre une mémoire du type EEPROM pour stocker un numéro d'identification servant à l'adressage dans le réseau. Il pourra aussi comprendre une cellule photosensible 18a agencée par exemple dans un orifice réalisé sur le couvercle ou dans une paroi latérale du boîtier 11 pour mesurer la luminosité extérieure au boîtier. Plus généralement, nous rappelons que le module de contrôle 18 pourra inclure une unité de contrôle de candélabre pouvant notamment remplir une ou plusieurs des fonctions suivantes :
- commander l'allumage ou l'extinction de la lampe montée dans la douille 15 de la douille gigogne 10 elle-même montée sur un candélabre 1a ou similaire ;
- gérer l'amorçage de cette lampe ;
- varier la puissance d'alimentation délivrée à cette lampe ;
- mesurer le courant électrique consommé par cette lampe ;
- déterminer le déphasage entre le courant et la tension (cos φ) ;
- mesurer la température extérieure ou à l'intérieur du module électronique.

Ces fonctions peuvent être mises en oeuvre de façon connue en soi.

Dans le cas où l'unité de contrôle de candélabre comprend des moyens pour mesurer le courant électrique consommé par la lampe, elle pourra avantageusement couper l'alimentation de la lampe du candélabre 1a en cas de surintensité mesurée pour sécuriser le candélabre. Dans ce cas, il est préférable que la remise en route de la lampe soit manuelle ou nécessite une commande envoyée au module de contrôle du candélabre par le poste de supervision décrit plus loin.

L'émetteur/récepteur 17 et le module de contrôle 18 sont alimentés en énergie par le biais de la douille 13 lorsque la douille gigogne 10 est montée dans une douille femelle 20 correspondante d'un candélabre ou similaire qui est alimentée électriquement.

De manière similaire, l'alimentation à découpage 19 reçoit son énergie depuis la douille 13 et ses sorties sont reliées aux lamelles 16 pour alimenter l'ampoule 21 lorsqu'elle est placée dans la douille 15.

L'alimentation à découpage 19 est avantageusement commandée par le module de contrôle 18 pour alimenter ou non l'ampoule 21 et/ou pour faire varier la puissance délivrée à l'ampoule 21.

A titre d'exemple, un boîtier 11 de diamètre 60 mm et de profondeur 50 mm peut suffire pour recevoir l'ensemble des composants susmentionnés.

Dans un autre mode de réalisation, l'émetteur/récepteur radio 17 est remplacé par un émetteur/récepteur à courant porteur.

Pour constituer un noeud 1 du réseau de l'invention, il suffit de monter une douille gigogne 10 sur un candélabre 1a au lieu et place de l'ampoule 21 habituelle. Autrement dit, la douille mâle 13 de la douille gigogne 10 est montée dans la douille femelle 20 du candélabre la qui reçoit habituellement l'ampoule 21, cette dernière étant montée dorénavant dans la douille femelle 15 de la douille gigogne 10.

Nous allons maintenant décrire plus en détail l'alimentation à découpage 19.

L'entrée de l'alimentation à découpage 19 est connectée à un pont de diode D3 pour redresser le courant. De préférence, un condensateur de lissage C9 et une diode zener D8 sont branchés en parallèles sur les sorties du pont de diode D8 pour lisser et stabiliser la tension redressée. La tension redressée, éventuellement lissée et stabilisée, est appliquée à l'enroulement primaire d'un transformateur Tr1 par l'intermédiaire d'un interrupteur commandé D7 pour hacher à fréquence élevée la tension appliquée au primaire du transformateur Tr1. L'interrupteur commandé D7 est en l'occurrence un thyristor, mais ce pourrait également être un transistor de puissance ou toute autre composant adapté. Le transformateur Tr1. présente un enroulement secondaire à plusieurs sorties délivrant chacune une tension différente. Les trois premières sorties de l'enroulement sont chacune branchées, via un interrupteur commandé respectif D4, D5, D6, à la sortie de l'alimentation à découpage 19, c'est-à-dire à la douille 15 destinée à recevoir l'ampoule 21. Les interrupteurs commandés D4, D5, D6 sont d'un type similaire à l'interrupteur D7.

L'alimentation à découpage 19 est particulièrement adaptée pour alimenter une ampoule 21 du type lampe à décharge électrique, et plus particulièrement, du type lampe à vapeur de mercure ou à vapeur de sodium.

Pour cela, l'entrée de l'alimentation à découpage 19 est alimentée, par exemple par une tension de 230 V du réseau. L'interrupteur D7 est commuté à une fréquence élevée comprise entre environ 30 kHz et 90 KHz. Dans notre exemple, la fréquence est de 60 KHz. Le signal haché ainsi obtenu est appliqué à l'enroulement primaire du transformateur Tr1.

L'enroulement secondaire du transformateur Tr1 présente une première sortie - celle correspondant à l'interrupteur D4 - qui délivre une tension suffisante pour provoquer l'amorçage de la lampe. Dans notre exemple, cette tension est de 600 V.

L'enroulement secondaire du transformateur Tr1 présente une deuxième sortie - celle correspondant à l'interrupteur D5 - qui délivre une tension correspondant à la tension nominale de service de la lampe. Dans notre exemple, cette tension est de 100 V.

L'enroulement secondaire du transformateur Tr1 peut présenter en outre une troisième sortie - celle correspondant à l'interrupteur D6 - qui délivre une tension correspondant à une tension un peu inférieure à la tension de service de la lampe, mais suffisante pour conserver la lampe allumée. Dans notre exemple, cette tension est de 90 V.

Pour amorcer la lampe, on ferme l'interrupteur D4 et on maintient ouvert les interrupteurs D5 et D6. Lorsque la lampe est amorcée, on ferme l'interrupteur D5 alors qu'on ouvre l'interrupteur D4 de sorte à appliquer la tension nominale de service à la lampe. Deux méthodes peuvent être utilisée pour déterminer que la lampe est amorcée :
- soit par l'écoulement d'un temps fixe depuis le début de l'application de la tension d'amorçage ― c'est-à-dire depuis la fermeture de l'interrupteur D4 ;
- soit en fonction du courant consommé par la lampe qui peut être déterminé par un circuit de mesure du courant classique à partir duquel le module de contrôle 18 peut commander les interrupteurs D4 et D5.

S'il est souhaité diminuer la luminosité produite par la lampe, on ferme l'interrupteur D6 alors qu'on ouvre l'interrupteur D5 de sorte à appliquer la tension un peu inférieure à la tension nominale de service à la lampe.

L'homme du métier comprendra que la troisième sortie de l'enroulement secondaire est facultative. Au contraire, il est également possible d'avoir plusieurs sorties à l'enroulement secondaire délivrant chacune une tension respective située dans la plage de tension de fonctionnement nominal de la lampe.

Bien entendu, pour éteindre la lampe, il suffit d'ouvrir les interrupteurs D4, D5 et D6. Une autre possibilité consiste à maintenir ouvert l'interrupteur D7.

Les interrupteurs D4, D5, D6 et D7 sont commandés par le module de contrôle 18.

L'enroulement secondaire du transformateur peut encore avoir avantageusement une sortie supplémentaire basse tension ― par exemple de 12 Volts ― pour alimenter par le biais d'un circuit 22 de redressement et filtrage, l'émetteur/récepteur 17 et le module de contrôle 18 et éventuellement encore d'autres circuits électroniques.

L'homme du métier comprendra que l'alimentation à découpage 19 est un module indépendant des autres éléments logés dans la douille gigogne. Notamment, l'alimentation à découpage 19 peut être utilisée pour l'alimentation d'une lampe à décharge indépendamment de l'émetteur/récepteur 17. Il est ainsi possible de réaliser une douille gigogne ne comprenant pas d'émetteur/récepteur 17, mais incluant une alimentation à découpage du type 19 avec un module de commande spécifique pour commander les différents interrupteurs D4 à D7. Une telle douille gigogne pourra être utilisée notamment dans le cas où il n'est pas souhaité commander à distance la lampe.

Il est également possible de lui adjoindre seulement un récepteur à la place d'un émetteur/récepteur pour permettre la commande à distance de la lampe, mais pas de rapatrier des données relatives aux conditions de fonctionnement. Dans ce cas, une telle douille ne sera pas apte à constituer un noeud 1 du réseau de l'invention.

Enfin, il est évident qu'une telle alimentation à découpage 19 n'est pas nécessairement placée à l'intérieur d'une douille gigogne. Elle pourrait être logée par exemple directement dans le candélabre.

L'utilisation d'une alimentation à découpage pour alimenter une lampe à décharge a plusieurs avantages :
- elle permet de se passer des accessoires de la lampe que sont l'amorceur et le ballast utilisés actuellement et qui présentent un poids et un volume plus important par rapport à l'alimentation à découpage ;
- une alimentation à découpage peut être placée dans une douille gigogne du type décrite alors que l'amorceur et le ballast du type existant est trop volumineux et lourd ;
- les fronts raides de tension fournis par l'alimentation à découpage facilite l'amorçage de la lampe ;
- la fréquence de découpage élevée évite le scintillement de la lampe.

Bien entendu, la présente invention n'est pas limitée aux exemples et au mode de réalisation décrits et représentés, mais elle est susceptible de nombreuses variantes accessibles à l'homme de l'art.

## Revendications

1. Elément d'éclairage, comprenant au moins une lampe électrique d'éclairage (21) et un émetteur/récepteur radio (17) assurant la répétition de messages qu'il reçoit, l'émetteur-récepteur étant interfacé avec un circuit de contrôle de la lampe.

2. Elément d'éclairage selon la revendication 1, dans lequel le circuit de contrôle commande l'allumage et/ou l'extinction de la lampe en fonction d'un message reçu par l'émetteur/récepteur.

3. Elément d'éclairage selon la revendication 1 ou 2, dans lequel le circuit de contrôle effectue au moins l'une des mesures suivantes :
- mesure du courant électrique consommé par la lampe;
- mesure de la température extérieure ou du circuit de contrôle ;
- mesure de la luminosité extérieure ;
- mesure du déphasage entre courant et tension alimentant le candélabre ;
le circuit de contrôle comprenant de préférence une mémoire de stockage d'une ou plusieurs mesures effectuées.

4. Boîtier de connexion, avec :
- une douille femelle (15) de réception d'une lampe électrique ;
- un émetteur/récepteur radio (17) assurant la répétition de messages qu'il reçoit ;
- des moyens de connexion électrique en liaison électrique avec la douille femelle,
- un circuit de contrôle de la lampe montée dans la douille femelle ;
dans lequel l'émetteur-récepteur est interfacé avec le circuit de contrôle de la lampe.

5. Boîtier selon la revendication 4, dans lequel le circuit de contrôle commande l'ouverture ou la fermeture de la liaison électrique entre les moyens de connexion et la douille femelle en fonction d'un message reçu par l'émetteur/récepteur.

6. Boîtier selon la revendication 4 ou 5, dans lequel le circuit de contrôle effectue au moins l'une des mesures suivantes :
- mesure du courant électrique fourni à la douille femelle ;
- mesure de la température extérieure ou du circuit de contrôle ;
- mesure de la luminosité extérieure ;
- mesure du déphasage entre courant et tension alimentant la douille femelle ;
le circuit de contrôle pouvant en outre comprendre une mémoire de stockage d'une ou plusieurs mesures réalisées.

7. Réseau de transmission de données sans fils, comprenant au moins un noeud (1) comprenant un émetteur/récepteur radio (17) assurant la répétition de messages qu'il reçoit et interfacé avec un circuit de contrôle d'au moins une lampe électrique d'éclairage d'un élément d'éclairage.

8. Procédé de télégestion d'éclairage dans un réseau selon la revendication 7, comprenant :
- l'envoi via le réseau à destination dudit noeud d'un ordre de contrôle comprenant l'allumage ou l'extinction de la lampe de l'élément d'éclairage ; et
- la réception de l'ordre de contrôle par ledit noeud et l'allumage ou l'extinction de la lampe de l'élément d'éclairage conformément audit ordre de contrôle.

9. Procédé de collecte de mesures dans un réseau selon la revendication 7, comprenant :
- l'envoi via le réseau à destination dudit noeud d'un ordre de contrôle comprenant la lecture de la mesure d'au moins une grandeur physique relatif au fonctionnement de l'élément d'éclairage ; et
- la réception de l'ordre de contrôle par ledit noeud et l'envoi en retour de la mesure par ledit noeud via le réseau.

10. Procédé de collecte de mesures dans un réseau selon la revendication 7, comprenant :
- l'envoi via le réseau à destination dudit noeud d'un ordre de contrôle comprenant la lecture de la mesure d'au moins une grandeur physique relatif au fonctionnement de l'élément d'éclairage mis en mémoire par ledit noeud ; et
- la réception de l'ordre de contrôle par ledit noeud et l'envoi en retour par ledit noeud via le réseau de la mesure lue en mémoire.
